# EUROPEAN PATENT SPECIFICATION

(11) **EP 4 159 686 B1**
(45) Date of publication and mention of the grant of the patent: **03.12.2025**
(21) Application number: 21814629.8
(22) Date of filing: 21.05.2021
(51) Int. Cl.: C01G 53/00, H01M 4/36, H01M 4/505, H01M 4/525, H01M 4/62, H01M 10/052, H01M 10/0562, C01B 17/22, C01F 17/36

(54) **POSITIVE ELECTRODE ACTIVE MATERIAL, POSITIVE ELECTRODE MATERIAL, BATTERY, AND METHOD FOR PRODUCING POSITIVE ELECTRODE ACTIVE MATERIAL**
POSITIVELEKTRODENAKTIVMATERIAL, POSITIVELEKTRODENMATERIAL, BATTERIE UND VERFAHREN ZUR HERSTELLUNG EINES POSITIVELEKTRODENAKTIVMATERIALS
MATÉRIAU ACTIF D'ÉLECTRODE POSITIVE, MATÉRIAU D'ÉLECTRODE POSITIVE, BATTERIE ET PROCÉDÉ DE PRODUCTION DE MATÉRIAU ACTIF D'ÉLECTRODE POSITIVE

(30) Priority: 27.05.2020 JP 2020092707
(43) Date of publication of application: 05.04.2023
(73) Proprietor: Panasonic Intellectual Property Management Co., Ltd., Osaka-shi, Osaka 540-6207 (JP)
(72) Inventor: NAKAMA, Yoshimasa, Osaka-shi, Osaka 540-6207 (JP); NISHIO, Yusuke, Osaka-shi, Osaka 540-6207 (JP)
(74) Representative: Grünecker Patent- und Rechtsanwälte PartG mbB
(86) International application number: PCT/JP2021/019285
(87) International publication number: WO 2021/241416

(56) References cited:
- WO-A1-2020/067425
- CN-A- 105 390 693
- JP-A- 2011 204 666
- JP-A- 2018 125 214
- JP-A- H0 982 325

## Description

### Technical Field

The present disclosure relates to a positive electrode material, a battery, and a method for manufacturing a positive electrode material.

### Background Art

PTL 1 discloses an all-solid battery including an active material particle and a coating layer that coats at least part of the surface of the active material particle and using a complex active material particle in which the amount of water is equal to or less than a predetermined amount and a sulfide solid electrolyte. PTL 1 discloses that a lithium ion conductive oxide, such as lithium niobate, lithium titanate, lithium lanthanum zirconate, lithium tantalate, or lithium tungstate, is used as the coating material and that lithium niobate is particularly suitably used. PTL 2 discloses positive electrode materials for use in combination with liquid electrolytes.

### Citation List

### Patent Literature

PTL 1: JP 2018-125214 A
PTL 2: JP H09 82325 A

### Summary of Invention

### Technical Problem

The present disclosure provides a battery with a low internal resistance.

### Solution to Problem

The positive electrode material of the present disclosure includes: apositive electrode active material, which comprises: a a complex oxide represented by the following formula (1) as a main component and contains water in an amount of 2.9 ppm by mass or more and 44.7 ppm by mass or less generated during heating at 180°C in Karl Fischer titration,

LiNiₓMe₁₋ₓO₂ (1);

and
a solid electrolyte, wherein the solid electrolyte includes a halide solid electrolyte.

Here, x satisfies 0.5 ≤ x ≤ 1, and Me is at least one element selected from the group consisting of Mn, Co, and Al.

### Advantageous Effects of Invention

According to the present disclosure, a battery with a low internal resistance can be obtained.

### Brief Description of Drawings

[Fig. 1] Fig. 1 is a cross-sectional view illustrating schematic configurations of a positive electrode material 1000 and a battery 2000 in Embodiments 1 and 2, respectively.
[Fig. 2] Fig. 2 is a Nyquist diagram showing an example of the results of evaluation of reaction resistance by alternating current impedance measurement. Description of Embodiments

### (Underlying Knowledge Forming Basis of the Present Disclosure)

The present inventors diligently studied factors that increase the battery resistance of an all-solid lithium ion battery. As a result, the present inventors have found that a trace amount of water contained in an active material reacts with a halide solid electrolyte to deteriorate the halide and thereby increases the resistance of the all-solid lithium ion battery. The present inventors considered based on this finding that when an active material is manufactured, treatment for significantly reducing the amount of water in the active material is necessary and proceeded with further research. As a result, it was found that when an active material is manufactured, the amount of water contained in the active material can be greatly reduced by performing drying under specified conditions. An all-solid lithium ion battery with a low battery resistance could be obtained by manufacturing the all-solid lithium ion battery using the thus-manufactured active material.

### (Outline of an aspect according to the present disclosure)

A positive electrode material according to a 1st aspect of the present disclosure includes: a complex oxide, which is represented by the following formula (1) as a main component and contains water in an amount of 2.9 ppm by mass or more and 44.7 ppm by mass or less generated during heating at 180°C in Karl Fischer titration,

LiNiₓMe₁₋ₓO₂ (1) ;

and
a solid electrolyte, wherein the solid electrolyte includes a halide solid electrolyte.

Here, x satisfies 0.5 ≤ x ≤ 1; and Me is at least one element selected from the group consisting of Mn, Co, and Al.

Embodiments of the present disclosure will now be described with reference to the drawings.

### (Embodiment 1)

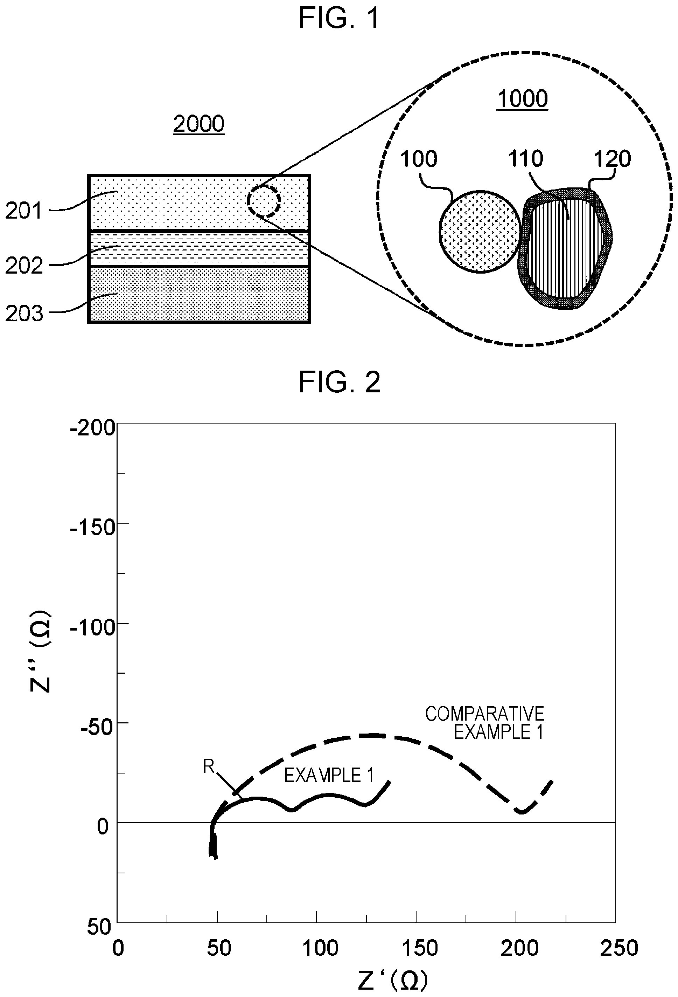

Fig. 1 is a cross-sectional view illustrating a schematic configuration of the positive electrode material 1000 in Embodiment 1.

The positive electrode material 1000 in Embodiment 1 includes a solid electrolyte 100 and a positive electrode active material 110. As shown in Fig. 1, the positive electrode active material 110 and the solid electrolyte 100 are, for example, in particulate form.

Here, the positive electrode active material 110 includes a complex oxide represented by the following formula (1) as a main component and contains water in an amount of 2.9 ppm by mass or more and 44.7 ppm by mass or less generated during heating at 180°C in Karl Fischer titration,

LiNiₓMe₁₋ₓO₂ (1),

wherein
X satisfies 0.5 ≤ x ≤ 1, and Me is at least one element selected from Mn, Co, and Al.

According to the above configuration, the resistance of a battery can be reduced.

Here, the term "main component" refers to the most abundant component by mass ratio.

The amount of water in the positive electrode active material 110 is specified by measuring the amount of water generated during heating at 180°C by Karl Fischer titration. The water generated at 180°C is inferred to be mainly water physically adsorbed to the positive electrode active material 110 and hydrated water binding to, for example, surface impurities.

The positive electrode active material 110 may contain a material that can be used as the active material of an all-solid lithium ion battery in addition to the complex oxide represented by the formula (1).

Examples of the material that can be used as the active material of an all-solid lithium ion battery include LiCoO₂, LiNiₓCo₁₋ₓO₂ (0 < x < 0.5), LiNi_{1/3}Co_{1/3}Mn_{1/3}O₂, LiMnO₂, a different kind element substituent Li-Mn spinel (e.g., LiMni_{1.5}Ni_{0.5}O₄, LiMn_{1.5}Al_{0.5}O₄, LiMn_{1.5}Mg_{0.5}O₄, LiMn_{1.5}Co_{0.5}O₄, LiMn_{1.5}Fe_{0.5}O₄, or LiMn_{1.5}Zn_{0.5}O₄), lithium titanate (e.g., Li₄Ti₅O₁₂), lithium metal phosphate (e.g., LiFePO₄, LiMnPO₄, LiCoPO₄, and LiNiPO₄), and a transition metal oxide (e.g., V₂O₅ and MoO₃).

Among the above-mentioned materials, a lithium-containing complex oxide selected from, for example, LiCoO₂, LiNiₓCo₁₋ₓO₂ (0 < x < 0.5), LiNi_{1/3}Co_{1/3}Mn_{1/3}O₂, LiMnO₂, a different kind element substituent Li-Mn spinel, and lithium metal phosphate is preferable.

The amount of water in the positive electrode active material 110 is 2.9 ppm by mass or more and 44.7 ppm by mass or less. In application to an all-solid lithium ion battery, the solid electrolyte 100 described later can be prevented from being deteriorated due to water contained in the positive electrode active material 110 by suppressing the amount of water in the positive electrode active material 110 to 44.7 ppm by mass or less to maintain a high conductivity of the solid electrolyte 100. Accordingly, a battery with a low battery resistance is provided by using the positive electrode active material 110. In addition, when the amount of water in the positive electrode active material 110 is controlled to 2.9 ppm or more, the solid electrolyte 100 is prevented from being oxidatively decomposed due to contact with the positive electrode active material 110 as the battery is charged to provide a battery with a low battery resistance.

Since deterioration due to a reaction between the physically adsorbed water and the active material during high-temperature drying is of concern for LiNiₓMe₁₋ₓO₂ having the composition satisfying 0.5 ≤ x ≤ 1, it is desirable to sufficiently remove physically adsorbed water at low temperature.

The positive electrode active material 110 is dried by, for example, heating within a range of 70°C or more and less than 120°C for 12 hours or more and 500 hours or less in advance prior to constituting a positive electrode material. Alternatively, the positive electrode active material 110 is dried by, for example, at least one selected from the group consisting of heating within a range of 70°C or more and less than 120°C for 12 hours or more and 500 hours or less, heating at a temperature of 150°C or more and less than 500°C for 0.5 hours or more, and heating at a temperature of 600°C or more and 850°C or less for 0.5 hours or more, in advance prior to constituting a positive electrode material.

The atmosphere during drying may be vacuum or normal pressure and may be an atmosphere of a dew point of -60°C or less. As long as the dew point is -60°C or less, the drying may be performed in a nitrogen gas or in an oxygen gas. The dried positive electrode active material 110 is subjected to measurement of the amount of water generated during heating at 180°C with a Karl Fischer moisture analyzer.

Heating within a range of 70°C or more and less than 120°C may be performed for 12 hours or more and 350 hours or less or for 24 hours or more and 350 hours or less.

At least one selected from the group consisting of heating at a temperature of 150°C or more and less than 500°C and heating at a temperature of 600°C or more and 850°C or less may be performed for 0.5 hours or more and 24 hours or less or for 1 hour or more and 12 hours or less.

In the positive electrode active material 110, the amount of water generated during heating at 180°C in Karl Fischer titration may be 30 ppm by mass or less or 20 ppm by mass or less. That is, the amount of water generated during heating at 180°C in Karl Fischer titration may be 2.9 ppm by mass or more and 30 ppm by mass or less or 2.9 ppm by mass or more and 20 ppm by mass or less, by.

The positive electrode active material 110 may include a coating material 120 on the surface thereof. Incidentally, the coating material 120 may coat the entire surface of the positive electrode active material 110 or may partially coat the surface.

The coating material 120 may contain Li and at least one element selected from the group consisting of O, F, and Cl.

The coating material 120 may contain at least one selected from the group consisting of lithium niobate, lithium phosphate, lithium titanate, lithium tungstate, lithium fluorozirconate, lithium fluoroaluminate, lithium fluorotitanate, and lithium fluoromagnesate.

Fig. 1 schematically shows a configuration of the positive electrode material 1000. As shown in Fig. 1, the positive electrode material 1000 includes a positive electrode active material 110 and a solid electrolyte 100.

As the solid electrolyte material included in the solid electrolyte 100, a halide solid electrolyte is used.

The solid electrolyte 100 may be a compound represented by the following formula (2):

Li_{α}M_{β}X_{γ} (2).

Here, α, β, and γ are values larger than 0; M includes at least one selected from the group consisting of metallic elements excluding Li and metalloid elements; and X includes at least one element selected from the group consisting of F, Cl, Br, and I.

Here, the metalloid element is B, Si, Ge, As, Sb, or Te. The metallic element is any of all elements in Groups 1 to 12 of the Periodic Table excluding hydrogen or any of all elements in Groups 13 to 16 excluding the above-mentioned metalloid elements, C, N, P, O, S, and Se. That is, the metallic elements are those in a group of elements that can become cations when form a halogen compound or an inorganic compound.

As the solid electrolyte 100, for example, Li₃YX₆, Li₂MgX₄, Li₂FeX₄, Li(Al,Ga,In)X₄, or Li₃(Al,Ga,In)X₆ can be used. Here, X is at least one selected from the group consisting of F, Cl, Br, and I.

In the present disclosure, "(A,B,C)" means "at least one selected from the group consisting of A, B, and C".

According to the above configuration, the resistance of a battery can be reduced.

The formula (2) may satisfy 2.5 ≤ α ≤ 3, 1 ≤ β ≤ 1.1, and γ = 6.

In the formula (2), X may include at least one selected from the group consisting of Cl and Br.

In the formula (2), M may include yttrium (Y).

The solid electrolyte including Y may be, for example, a compound represented by a composition formula of LiₐM'_{b}Y_{c}X₆. Here, a + mb + 3c = 6 and c > 0 are satisfied; M' is at least one selected from the group consisting of metallic elements excluding Li and Y and metalloid elements; m denotes the valence of M'; and X is at least one selected from the group consisting of F, Cl, Br, and I.

As the M', at least one selected from the group consisting of Mg, Ca, Sr, Ba, Zn, Sc, Al, Ga, Bi, Zr, Hf, Ti, Sn, Ta, and Nb may be used.

As the solid electrolyte including Y, specifically, Li₃YF₆, Li₃YCl₆, Li₃YBr₆, Li₃YI₆, Li₃YBrCl₅, Li₃YBr₃Cl₃, Li₃YBr₅Cl, Li₃YBr₅I, Li₃YBr₃I₃, Li₃YBrI₅, Li₃YClI₅, Li₃YCl₃I₃, Li₃YCl₅I, Li₃YBr₂Cl₂I₂, Li₃YBrCl₄I, Li_{2.7}Y_{1.1}Cl₆, Li_{2.5}Y_{0.5}Zr_{0.5}Cl₆, Li_{2.5}Y_{0.3}Zr_{0.7}Cl₆, etc. can be used.

According to the above configuration, the resistance of a battery can be further reduced.

Incidentally, the halide solid electrolyte does not have to include sulfur. In addition, the shapes of the solid electrolyte 100 and the positive electrode active material 110 in Embodiment 1 are not particularly limited and may be, for example, needle, spherical, or oval spherical. For example, the shapes of the solid electrolyte 100 and positive electrode active material 110 may be particulate.

For example, when the shape of the solid electrolyte 100 in Embodiment 1 is particulate (e.g., spherical), the median diameter may be 100 µm or less.

When the median diameter of the solid electrolyte 100 is 100 µm or less, the positive electrode active material 110 and the solid electrolyte 100 can form a good dispersion state in the positive electrode material 1000. Consequently, the charge and discharge characteristics of a battery are improved.

In addition, in Embodiment 1, the median diameter of the solid electrolyte 100 may be 10 µm or less.

According to the above configuration, in the positive electrode material 1000, the positive electrode active material 110 and the solid electrolyte 100 can form a good dispersion state.

In addition, in Embodiment 1, the median diameter of the solid electrolyte 100 may be smaller than that of the positive electrode active material 110.

According to the above configuration, the solid electrolyte 100 and the positive electrode active material 110 can form a better dispersion state in the positive electrode material 1000.

The median diameter of the positive electrode active material 110 may be 0.1 µm or more and 100 µm or less.

When the median diameter of the positive electrode active material 110 is 0.1 µm or more, in the positive electrode material 1000, the positive electrode active material 110 and the solid electrolyte 100 can form a good dispersion state. As this result, the charge and discharge characteristics of a battery are improved.

When the median diameter of the positive electrode active material 110 is 100 µm or less, the diffusion speed of lithium in the positive electrode active material 110 can be sufficiently secured. Consequently, high-output operation of the battery is possible.

In the present disclosure, the "median diameter" means the particle diameter at which the accumulated volume is equal to 50% in a volume-based particle size distribution. The volume-based particle size distribution is measured with, for example, a laser diffraction measurement apparatus or an image analyzer.

Incidentally, in the positive electrode material 1000 in Embodiment 1, particles of the solid electrolyte 100 and particles of the positive electrode active material 110 may be in contact with each other as shown in Fig. 1. On this occasion, the coating material 120 and the positive electrode active material 110 come into contact with each other.

The positive electrode material 1000 in Embodiment 1 may include particles of a **plurality** of solid electrolytes 100 and particles of a plurality of positive electrode active materials 110.

In addition, in the positive electrode material 1000 in Embodiment 1, the content of the solid electrolyte 100 and the content of the positive electrode active material 110 may be the same as or different from each other.

### (Embodiment 2)

Embodiment 2 will now be described. The description overlapping with that of Embodiment 1 will be appropriately omitted.

Fig. 1 is a cross-sectional view illustrating a schematic configuration of a battery 2000 in Embodiment 2.

The battery 2000 in Embodiment 2 includes a positive electrode 201, an electrolyte layer 202, and a negative electrode 203.

The positive electrode 201 includes the positive electrode material 1000.

The electrolyte layer 202 is disposed between the positive electrode 201 and the negative electrode 203.

According to the above configuration, the discharge voltage of a battery can be improved.

The volume ratio of the positive electrode active material 110 and the solid electrolyte 100 contained in the positive electrode 201, "v1 : 100 - v1", may satisfy 30 ≤ v1 ≤ 95. When 30 ≤ v1 is satisfied, an energy density of the battery 2000 is sufficiently secured. When v1 ≤ 95 is satisfied, high-output operation is possible.

The thickness of the positive electrode 201 may be 10 µm or more and 500 µm or less. When the thickness of the positive electrode 201 is 10 µm or more, an energy density of the battery 2000 is sufficiently secured. When the thickness of the positive electrode 201 is 500 µm or less, high-output operation is possible.

The electrolyte layer 202 is a layer containing an electrolyte material. The electrolyte material is, for example, a solid electrolyte material. That is, the electrolyte layer 202 may be a solid electrolyte layer. As the solid electrolyte, the materials exemplified as the material of the solid electrolyte 100 in Embodiment 1 may be used. That is, the electrolyte layer 202 may contain a solid electrolyte having the same composition as that of the solid electrolyte 100 contained in the positive electrode material 1000.

The electrolyte layer 202 may contain a halide solid electrolyte having a composition different from that of the solid electrolyte contained in the positive electrode material 1000.

The electrolyte layer 202 may contain a sulfide solid electrolyte.

The electrolyte layer 202 may contain only one solid electrolyte selected from the group of the above-mentioned solid electrolytes or may contain two or more solid electrolytes selected from the group of the above-mentioned solid electrolytes. Plurality of solid electrolytes have compositions different from each other. For example, the electrolyte layer 202 may contain a halide solid electrolyte and a sulfide solid electrolyte.

The thickness of the electrolyte layer 202 may be 1 µm or more and 300 µm or less. When the thickness of the electrolyte layer 202 is 1 µm or more, the positive electrode 201 and the negative electrode 203 are unlikely to be short-circuited. When the thickness of the electrolyte layer 202 is 300 µm or less, high-output operation is possible.

The negative electrode 203 contains a material that has a property of occluding and releasing metal ions (e.g., lithium ions). The negative electrode 203 contains, for example, a negative electrode active material.

As the negative electrode active material, for example, a metal material, a carbon material, an oxide, a nitride, a tin compound, or a silicon compound can be used. The metal material may be a single metal. Alternatively, the metal material may be an alloy. Examples of the metal material include lithium metals and lithium alloys. Examples of the carbon material include natural graphite, coke, carbon under graphitization, carbon fibers, spherical carbon, artificial graphite, and amorphous carbon. From the viewpoint of capacity density, silicon (Si), tin (Sn), a silicon compound, or a tin compound can be suitably used.

The negative electrode 203 may contain a solid electrolyte material. According to the above configuration, the lithium ion conductivity in the negative electrode 203 can be enhanced, and high-output operation is possible. As the solid electrolyte, the materials exemplified in Embodiment 1 may be used. That is, the negative electrode 203 may contain a solid electrolyte having the same composition as that of the solid electrolyte contained in the positive electrode material 1000.

The median diameter of the negative electrode active material may be 0.1 µm or more and 100 µm or less.

When the median diameter of the negative electrode active material is 0.1 µm or more, the negative electrode active material and the solid electrolyte material can form a good dispersion state. As a result, the charge and discharge characteristics of a battery are improved.

In addition, when the median diameter of the negative electrode active material is 100 µm or less, the diffusion speed of lithium in the negative electrode active material can be sufficiently secured. Consequently, high-output operation of the battery is possible.

The median diameter of the negative electrode active material may be larger than that of the solid electrolyte material. Consequently, the negative electrode active material and the solid electrolyte material can form a good dispersion state.

The volume ratio of the negative electrode active material and the solid electrolyte material contained in the negative electrode 203, "v2 : 100 - v2", may satisfy 30 ≤ v2 ≤ 95. When 30 ≤ v2 is satisfied, an energy density of the battery 2000 is sufficiently secured. When v2 ≤ 95 is satisfied, high-output operation is possible.

The thickness of the negative electrode 203 may be 10 µm or more and 500 µm or less. When the thickness of the negative electrode 203 is 10 µm or more, an energy density of the battery 2000 is sufficiently secured. When the thickness of the negative electrode 203 is 500 µm or less, high-output operation is possible.

At least one selected from the group consisting of the positive electrode 201, the electrolyte layer 202, and the negative electrode 203 may include a binder for the purpose of improving the adhesion between particles. The binder is used for improving the adhesion of the materials constituting the electrode. Examples of the binder include polyvinylidene fluoride, polytetrafluoroethylene, polyethylene, polypropylene, aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinyl pyrrolidone, polyether, polyether sulfone, hexafluoropolypropylene, styrene-butadiene-rubber, and carboxymethylcellulose. In addition, as the binder, a copolymer of two or more materials selected from tetrafluoroethylene, hexafluoroethylene, hexafluoropropylene, perfluoroalkylvinylether, vinylidene fluoride, chlorotrifluoroethylene, ethylene, propylene, pentafluoropropylene, fluoromethylvinylether, acrylic acid, and hexadiene can be used. Moreover, a mixture of two or more selected from these materials may be used as the binder.

At least one selected from the group consisting of the positive electrode 201 and the negative electrode 203 may include a conductive assistant for the purpose of enhancing the electron conductivity. As the conductive assistant, for example, graphite such as natural graphite or artificial graphite, carbon black such as acetylene black or Ketjen black, a conductive fiber such as a carbon fiber or a metal fiber, a metal powder such as fluorinated carbon or aluminum, a conductive whisker such as zinc oxide or potassium titanate, a conductive metal oxide such as titanium oxide, or a conductive polymer compound such as polyaniline, polypyrrole, or polythiophene can be used. In the case of using a carbon conductive assistant, it is possible to reduce the cost.

Incidentally, the battery in Embodiment 2 can be configured as batteries of various shapes, such as a coin type, a cylindrical type, a square type, a sheet type, a button type, a flat type, and a stacked type.

### EXAMPLES

The present disclosure will now be described in more detail with reference to Examples.

### <<Example 1>>

### [Production of positive electrode active material]

A positive electrode active material, LiNi_{0.8}(Co,Mn)_{0.2}O₂, was vacuum-dried at 100°C for 2 weeks and was then taken out in a dry atmosphere with a dew point of -20°C or less. Hereinafter, LiNi_{0.8}(Co,Mn)_{0.2}O₂ is referred to as NCM. Thus, a positive electrode active material of Example 1 was obtained.

In the present Example, it was confirmed that physically adsorbed water in a positive electrode active material can be sufficiently removed by vacuum drying at 100°C for 2 weeks. Specifically, it was confirmed that in the positive electrode active material according to the present Example, the amount of water measured by Karl Fischer titration at 120°C is 1 ppm or less.

### [Measurement of water amount]

The amount of water in the positive electrode active material produced in Example 1 was measured with a Karl Fischer moisture analyzer (manufactured by Nittoseiko Analytech Co., Ltd., CA-310). The heating temperature of the measurement sample was set to 180°C. The amount of water in the positive electrode active material of Example 1 was 44.7 ppm by mass.

### [Production of halide solid electrolyte]

Raw material powders, LiCl, LiBr, and YCl₃, were weighed at a molar ratio, LiCl : LiBr : YCl₃, of 1 : 2 : 1 in an argon glove box with a dew point of -60°C or less. These powders were pulverized and mixed in a mortar. Subsequently, milling treatment was performed using a planetary ball mill at 600 rpm for 12 hours.

As in above, a powder of halide solid electrolyte represented by a composition formula Li₃YBr₂Cl₄ was obtained.

### [Production of positive electrode material]

Li₃YBr₂Cl₄ and the positive electrode active material of Example 1 were weighed at a mass ratio of 20 : 80 in an argon glove box with a dew point of -60°C or less. These materials were mixed in an agate mortar to produce a positive electrode material of Example 1.

### [Production of sulfide solid electrolyte]

Li₂S and P₂S₅ were weighed at a molar ratio, Li₂S : P₂S₅, of 75 : 25 in an argon glove box with a dew point of -60°C or less. These materials were pulverized and mixed in a mortar. Subsequently, milling treatment was performed using a planetary ball mill (manufactured by Fritsch, P-7 type) at 510 rpm for 10 hours to obtain a glass-like solid electrolyte. The glass-like solid electrolyte was heat-treated in an inert atmosphere at 270°C for 2 hours. Consequently, a glass-ceramic-like sulfide solid electrolyte was obtained.

### [Production of battery]

The following process was performed using Li₃YBr₂Cl₄, the positive electrode material of Example 1, and the sulfide solid electrolyte.

First, the sulfide solid electrolyte (80 mg), Li₃YBr₂Cl₄ (40 mg), and the positive electrode material (12 mg) of Example 1 were stacked in this order in an insulating outer cylinder and were pressure-molded at a pressure of 720 MPa to obtain a positive electrode and a solid electrolyte layer.

Subsequently, metallic Li (thickness: 200 µm) was stacked on the solid electrolyte layer on the opposite side to the side in contact with the positive electrode, followed by pressure-molding at a pressure of 80 MPa to produce a stack composed of the positive electrode, the solid electrolyte layer, and a negative electrode.

Subsequently, current collectors made of stainless steel were disposed on opposite sides of the stack, and the current collectors were provided with current collector leads.

Ultimately, the inside of the insulating outer cylinder was isolated from the outside atmosphere by sealing the insulating outer cylinder using an insulating ferrule to produce a battery of Example 1.

### [Electrochemical test]

A charge and discharge test was performed using the battery of Example 1 under the following conditions.

The battery was disposed in a thermostatic tank of 25°C and connected to a potentiostat (manufactured by Solartron Analytical) loaded with a frequency response analyzer.

Constant current charging was performed at a current value of 96 µA corresponding to 0.05 C rate (20-hour rate) with respect to the theoretical capacity of the battery, and the charging was ended at a voltage of 4.3 V.

Subsequently, the reaction resistance of the battery at room temperature was measured by an electrochemical alternating current impedance measurement method.

Fig. 2 is a Nyquist diagram showing an example of the results of evaluation of reaction resistance by alternating current impedance measurement.

The waveform of the semi-arc appearing in the obtained Nyquist diagram in Fig. 2 was attributed to the positive electrode resistance and the resistance with respect to the negative electrode In, and fitting analysis was performed to calculate the value of the positive electrode resistance. In Example 1, the reaction resistance of positive electrode of the battery was 49 Ω.

### <<Examples 2 to 4>>

### [Production of positive electrode active material]

NCM was vacuum-dried at 100°C for 2 weeks and was then heat-treated at 300°C for 1 hour in a nitrogen gas atmosphere. Subsequently, the NCM was taken out in a dry atmosphere with a dew point of -20°C or less. Thus, a positive electrode active material of Example 2 was obtained.

NCM was vacuum-dried at 100°C for 2 weeks and was then heat-treated at 400°C for 1 hour in a nitrogen gas atmosphere. Subsequently, the NCM was taken out in a dry atmosphere with a dew point of -20°C or less. Thus, a positive electrode active material of Example 3 was obtained.

NCM was vacuum-dried at 100°C for 2 weeks and was then heat-treated at 800°C for 1 hour in a nitrogen gas atmosphere. Subsequently, the NCM was taken out in a dry atmosphere with a dew point of -20°C or less. Thus, a positive electrode active material of Example 4 was obtained.

### [Measurement of water amount]

The amounts of water in the positive electrode active materials produced in Examples 2 to 4 were measured as in Example 1. The amounts of water in the positive electrode active materials of Examples 2 to 4 are shown in Table 1.

### [Production of positive electrode material]

Positive electrode materials of Examples 2 to 4 were produced as in Example 1 except that the positive electrode active materials of Examples 2 to 4 were respectively used as the positive electrode active materials.

### [Production of battery]

Batteries of Examples 2 to 4 were produced as in Example 1 except that the positive electrode materials of Examples 2 to 4 were respectively used as the positive electrode materials.

### [Electrochemical test]

A charge and discharge test was performed as in Example 1 using the batteries of Examples 2 to 4. The reaction resistances of positive electrodes of the batteries of Examples 2 to 4 are shown in Table 1 below.

### <<Examples 5 to 8>>

### [Production of positive electrode active material]

A positive electrode active material of Example 5 was obtained as in Example 2.

A positive electrode active material of Example 6 was obtained as in Example 3.

NCM was vacuum-dried at 100°C for 2 weeks and was then heat-treated at 450°C for 1 hour in a nitrogen gas atmosphere. Subsequently, the NCM was taken out in a dry atmosphere with a dew point of -20°C or less. Thus, a positive electrode active material of Example 7 was obtained.

A positive electrode active material of Example 8 was obtained as in Example 4.

### [Measurement of water amount]

The amounts of water in the positive electrode active materials produced in Examples 5 to 8 were measured as in Example 1. The amounts of water in the positive electrode active materials of Examples 5 to 8 are shown in Table 1.

### [Production of halide solid electrolyte]

Raw material powders LiCl and YCl₃ were weighed at a molar ratio, LiCl : YCl₃, of 3 : 1 in an argon glove box with a dew point of -60°C or less. These materials were pulverized and mixed in a mortar. Subsequently, milling treatment was performed using a planetary ball mill at 600 rpm for 12 hours.

As in above, a powder of halide solid electrolyte represented by a composition formula Li₃YCl₆ was obtained.

### [Production of positive electrode material]

Li₃YCl₆ and the positive electrode active material of Example 5 were weighed at a mass ratio of 20 : 80 in an argon glove box with a dew point of -60°C or less. These materials were mixed in an agate mortar to produce a positive electrode material of Example 5.

Positive electrode materials of Examples 6 to 8 were produced as in Example 5 except that the positive electrode active materials of Examples 6 to 8 were respectively used as the positive electrode active materials.

### [Production of battery]

A battery of Example 5 was produced as in Example 1 using Li₃YCl₆, the positive electrode material of Example 5, and the sulfide solid electrolyte.

Batteries of Examples 6 to 8 were produced as in Example 5 except that the positive electrode materials of Examples 6 to 8 were respectively used as the positive electrode materials.

### [Electrochemical test]

A charge and discharge test was performed as in Example 1 using the batteries of Examples 5 to 8. The reaction resistances of positive electrodes of the batteries of Examples 5 to 8 are shown in Table 1 below.

### <<Comparative Example 1>>

### [Production of positive electrode active material]

NCM managed in a dry atmosphere with a dew point of -20°C or less was used as the positive electrode active material of Comparative Example 1.

### [Measurement of water amount]

The amount of water in the positive electrode active material of Comparative Example 1 was measured as in Example 1. The amount of water in the positive electrode active material of Comparative Example 1 was 274.8 ppm by mass.

### [Production of positive electrode material]

Li₃YBr₂Cl₄ and the positive electrode active material of Comparative Example 1 were weighed at a weight ratio of 20 : 80 in an argon glove box with a dew point of -60°C or less. These materials were mixed in an agate mortar to produce a positive electrode material of Comparative Example 1.

### [Production of battery]

A battery of Comparative Example 1 was produced as in Example 1 using Li₃YBr₂Cl₄, the positive electrode material of Comparative Example 1, and a sulfide solid electrolyte.

### [Electrochemical test]

A charge and discharge test was performed as in Example 1 using the battery of Comparative Example 1. The reaction resistance of positive electrode of the battery of Comparative Example 1 is shown in Table 1 below.

### <<Comparative Example 2>>

### [Production of positive electrode active material]

NCM was vacuum-dried at 100°C for 2 weeks and was then heat-treated at 500°C for 1 hour in a nitrogen gas atmosphere. Subsequently, the NCM was taken out in a dry atmosphere with a dew point of -20°C or less. Thus, a positive electrode active material of Comparative Example 2 was obtained.

### [Measurement of water amount]

The amount of water in the positive electrode active material produced in Comparative Example 2 was measured as in Example 1. The heating temperature of the measurement sample was set to 180°C. The amount of water in the positive electrode active material of Comparative Example 2 was 2.5 ppm by mass.

### [Production of positive electrode material]

Li₃YBr₂Cl₄ and the positive electrode active material of Comparative Example 2 were weighed at a weight ratio of 20 : 80 in an argon glove box with a dew point of -60°C or less. These materials were mixed in an agate mortar to produce a positive electrode material of Comparative Example 2.

### [Production of battery]

A battery of Comparative Example 2 was produced as in Example 1 using Li₃YBr₂Cl₄, the positive electrode material of Comparative Example 2, and the sulfide solid electrolyte.

### [Electrochemical test]

A charge and discharge test was performed as in Example 1 using the battery of Comparative Example 2. The reaction resistance of positive electrode of the battery of Comparative Example 2 is shown in Table 1 below.

**[Table 1]**

| | Drying conditions | Solid electrolyte | Reaction resistance at 4.3V (Ω) | Amount of water generated at 180°C (ppm) |
|---|---|---|---|---|
| Example 1 | 100°C vacuum drying only | Li₃YBr₂Cl₄ | 49 | 44.7 |
| Example 2 | 100°C vacuum drying 300°C N₂ drying | Li₃YBr₂Cl₄ | 84 | 3.5 |
| Example 3 | 100°C vacuum drying 400°C N₂ drying | Li₃YBr₂Cl₄ | 124 | 13.7 |
| Example 4 | 100°C vacuum drying 800°C N₂ drying | Li₃YBr₂Cl₄ | 70 | 4.6 |
| Example 5 | 100°C vacuum drying 300°C N₂ drying | Li₃YCl₆ | 25 | 3.5 |
| Example 6 | 100°C vacuum drying 400°C N₂ drying | Li₃YCl₆ | 64 | 13.7 |
| Example 7 | 100°C vacuum drying 450°C N₂ drying | Li₃YCl₆ | 74 | 2.9 |
| Example 8 | 100°C vacuum drying 800°C N₂ drying | Li₃YCl₆ | 31 | 4.6 |
| Comparative Example 1 | No drying treatment | Li₃YBr₂Cl₄ | 215 | 274.8 |
| Comparative Example 2 | 100°C vacuum drying 500°C N₂ drying | Li₃YBr₂Cl₄ | 394 | 2.5 |

### <<Consideration>>

As the results of Example 1 show, it is demonstrated that when the amount of water generated during heating at 180°C in Karl Fischer titration of a positive electrode active material is 2.9 ppm by mass or more and 44.7 ppm by mass or less, the reaction resistance of the battery is low. This is because a reduction in the amount of water in the positive electrode active material suppresses hydration and hydrolysis of the halide solid electrolyte Li₃YBr₂Cl₄.

In contrast, as the results of Comparative Example 1 show, it is demonstrated that when the amount of water in a positive electrode active material is large, the reaction resistance of the battery is high. This is because the halide solid electrolyte Li₃YBr₂Cl₄ becomes in contact with water on the surface of the positive electrode active material and is hydrated and hydrolyzed.

As the results of Comparative Example 2 show, it is demonstrated that when the amount of water generated during heating at 180°C in Karl Fischer titration of a positive electrode active material is less than 2.9 ppm by mass, the reaction resistance of the battery is high. This is because since hydration and hydrolysis of the halide solid electrolyte Li₃YBr₂Cl₄ are too much suppressed, the positive electrode active material powder and the halide solid electrolyte Li₃YBr₂Cl₄ come into contact with each other and are oxidatively decomposed with charging of the battery.

In addition, it is demonstrated from the results of Comparative Example 2 that when the temperature during drying of the positive electrode active material is 500°C, the reaction resistance of the battery is high. This is because the temperature affects the conditions of the surface of the active material. For example, it is conceived that when the temperature during drying reaches 500°C, the conditions of the surface of the active material become to increase the reaction resistance. In addition, it is conceived that when the temperature during drying reaches a higher temperature of 600°C or more, the conditions of the surface of the active material become to decrease the reaction resistance.

As the above Examples show, according to the present disclosure, it is possible to reduce the internal resistance of a battery during charging.

### Industrial Applicability

The battery of the present disclosure can be used, for example, as an all-solid battery.

### Reference Signs List

- 1000: positive electrode material
- 100: solid electrolyte
- 110: positive electrode active material
- 120: coating material
- 2000: battery
- 201: positive electrode
- 202: electrolyte layer
- 203: negative electrode

## Claims

1. A positive electrode material (1000) comprising:
a positive electrode active material (110) comprising a complex oxide represented by a following formula (1) as a main component and containing water generated during heating at 180°C in Karl Fischer titration in an amount of 2.9 ppm by mass or more and 44.7 ppm by mass or less,
LiNiₓMe₁₋ₓO₂ (1),
where x satisfies 0.5 ≤ x ≤ 1; and Me is at least one element selected from the group consisting of Mn, Co, and Al; and
a solid electrolyte (100);
wherein the solid electrolyte (100) includes a halide solid electrolyte.

2. The positive electrode material (1000) positive electrode active material (110) according to claim 1, wherein the positive electrode active material (110) further comprises:
a coating material (120) coating a surface of the positive electrode active material (110), wherein
the coating material (120) includes lithium element and at least one element selected from the group consisting of oxygen element, fluorine element, and chlorine element.

3. The positive electrode material (1000) according to claim 2, wherein
the coating material (120) includes at least one selected from the group consisting of lithium niobate, lithium phosphate, lithium titanate, lithium tungstate, lithium fluorozirconate, lithium fluoroaluminate, lithium fluorotitanate, and lithium fluoromagnesate.

4. The positive electrode material (1000) according to any one of claims 1 to 3, wherein
the solid electrolyte (100) is represented by a following formula (2):
Li_{α}M_{β}X_{γ} (2),
where, α, β, and γ are each independently a value larger than 0;
M includes at least one selected from the group consisting of metallic elements excluding Li and metalloid elements; and
X includes at least one selected from the group consisting of F, Cl, Br, and I.

5. The positive electrode material (1000) according to claim 5, wherein
M includes yttrium.

6. The positive electrode material (1000) according to claim 5 or 6, wherein
the formula (2) satisfies 2.5 ≤ α ≤ 3, 1 ≤ β ≤ 1.1, and γ = 6.

7. The positive electrode material (1000) according to any one of claims 5 to 7, wherein
X includes at least one selected from the group consisting of Cl and Br.

8. A battery (2000) comprising:
a positive electrode (201) including the positive electrode material (1000) according to any one of claims 1 to 7;
a negative electrode (203); and
an electrolyte layer (202) disposed between the positive electrode (201) and the negative electrode (203).

9. The battery (2000) according to claim 8, wherein the electrolyte layer (202) includes the solid electrolyte (100).

10. The battery (2000) according to claim 8 or 9, wherein
the electrolyte layer (202) includes a halide solid electrolyte different from the solid electrolyte (100).

11. The battery (2000) according to any one of claims 8 to 10, wherein
the electrolyte layer (202) includes a sulfide solid electrolyte.

12. A method for manufacturing the positive electrode material (1000) according to any one of claims 1 to 7,
the manufacturing method comprising a drying step of drying a material constituting the positive electrode active material (110), wherein
the drying step satisfies following (A) or (B):
(A) the drying step includes only drying the material constituting the positive electrode active material (110) within a range of 70°C or more and less than 120°C for 12 hours or more and 500 hours or less; and
(B) the drying step includes at least one selected from the group consisting of drying the material constituting the positive electrode active material (110) within a range of 70°C or more and less than 120°C for 12 hours or more and 500 hours or less, drying the material constituting the positive electrode active material (110) at a temperature of 150°C or more and less than 500°C for 0.5 hours or more, and drying the material at a temperature of 600°C or more and 850°C or less for 0.5 hours or more.

## Patentansprüche

1. Material (1000) für eine positive Elektrode, das umfasst:
ein aktives Material (110) für die positive Elektrode, das ein komplexes Oxid, das durch eine folgende Formel (1) repräsentiert wird, als eine Hauptkomponente umfasst und Wasser, das bei Erhitzen auf 180 °C bei Karl-Fischer-Titration erzeugt wird, in einer Massenkonzentration von 2,9 ppm oder mehr und 44,7 ppm oder weniger enthält,
LiNiₓMe₁₋ₓO₂ (1),
wobei für x 0,5 ≤ x ≤ 1 gilt; und Me wenigstens ein Element ist, das aus der Gruppe ausgewählt wird, die aus Mn, Co, und Al besteht; sowie
einen Festelektrolyten (100);
wobei der Festelektrolyt (100) einen Halogenid-Festelektrolyt einschließt.

2. Material (1000) für eine positive Elektrode mit aktivem Material (110) für die positive Elektrode nach Anspruch 1, wobei das aktive Material (110) für die positive Elektrode des Weiteren umfasst:
ein Überzugsmaterial (120), mit dem eine Oberfläche des aktiven Materials (110) für die positive Elektrode überzogen ist, wobei
das Überzugsmaterial (120) elementares Lithium sowie wenigstens ein Element einschließt, das aus der Gruppe ausgewählt wird, die aus elementarem Sauerstoff, elementarem Fluor sowie elementarem Chlor besteht.

3. Material (1000) für eine positive Elektrode nach Anspruch 2, wobei
das Überzugsmaterial (120) wenigstens eine Verbindung einschließt, die aus der Gruppe ausgewählt wird, die aus Lithiumniobat, Lithiumphosphat, Lithiumtitanat, Lithiumwolframat, Lithiumfluorozirkonat, Lithiumfluoroaluminat, Lithiumfluorotitanat sowie Lithiumfluoromagnesat besteht.

4. Material (1000) für eine positive Elektrode nach einem der Ansprüche 1 bis 3, wobei
der Festelektrolyt (100) durch eine folgende Formel (2) repräsentiert wird:
Li_{α}M_{β}X_{γ} (2),
wobei α, β, und γ jeweils unabhängig ein Wert größer als 0 sind;
M wenigstens ein Element einschließt, das aus der aus Metallelementen bestehenden Gruppe mit Ausnahme von Li sowie Metalloidelementen ausgewählt wird; und
X wenigstens ein Element einschließt, das aus der Gruppe ausgewählt wird, die aus F, Cl, Br und I besteht.

5. Material (1000) für eine positive Elektrode nach Anspruch 5, wobei
M Yttrium einschließt.

6. Material (1000) für eine positive Elektrode nach Anspruch 5 oder 6, wobei
für die Formel (2) 2,5 ≤ α ≤ 3, 1 ≤ β ≤ 1,1 und γ = 6 gilt.

7. Material (1000) für eine positive Elektrode nach einem der Ansprüche 5 bis 7, wobei
X wenigstens ein Element einschließt, das aus der Gruppe ausgewählt wird, die aus Cl und Br besteht.

8. Batterie (2000), die umfasst:
eine positive Elektrode (201) die das Material (1000) für eine positive Elektrode nach einem der Ansprüche 1 bis 7 einschließt;
eine negative Elektrode (203); sowie
eine Elektrolytschicht (202), die zwischen der positiven Elektrode (201) und der negativen Elektrode (203) angeordnet ist.

9. Batterie (2000) nach Anspruch 8, wobei die Elektrolytschicht (202) den Festelektrolyten (100) einschließt.

10. Batterie (2000) nach Anspruch 8 oder 9, wobei
die Elektrolytschicht (202) einen Halogenid-Festelektrolyt einschließt, der sich von dem Festelektrolyten (100) unterscheidet.

11. Batterie (2000) nach einem der Ansprüche 8 bis 10, wobei
die Elektrolytschicht (202) einen Sulfid-Festelektrolyten einschließt.

12. Verfahren zum Herstellen des Materials (1000) für eine positive Elektrode nach einem der Ansprüche 1 bis 7,
wobei das Herstellungsverfahren einen Trocken-Schritt zum Trocknen eines Materials umfasst, das das aktive Material (110) für die positive Elektrode bildet, wobei
für den Trocken-Schritt die folgende Bedingung (A) oder (B) gilt:
(A) der Trocken-Schritt schließt lediglich Trocknen des Materials, das das aktive Material (110) für die positive Elektrode bildet, in einem Bereich von 70 °C oder darüber und unter 120 °C über 12 Stunden oder länger und 500 Stunden oder kürzer ein; und
(B) der Trocken-Schritt schließt wenigstens einen Vorgang ein, der aus der Gruppe ausgewählt wird, die aus Trocknen des Materials, das das aktive Material (110) für die positive Elektrode bildet, innerhalb eines Bereiches von 70 °C oder darüber und unter 120 °C über 12 Stunden oder länger und 500 Stunden oder kürzer, Trocknen des Materials, das das aktive Material (110) für die positive Elektrode bildet, bei einer Temperatur von 150 °C oder darüber und unter 500 °C über 0,5 Stunden oder länger sowie Trocknen des Materials bei einer Temperatur von 600 °C oder darüber und 850 °C oder darunter über 0,5 Stunden oder länger besteht.

## Revendications

1. Matériau d'électrode positive (1000) comprenant :
un matériau actif d'électrode positive (110) comprenant un oxyde complexe représenté par une formule suivante (1) comme composant principal et contenant de l'eau générée pendant un chauffage à 180 °C lors d'une titration de Karl Fischer selon une quantité de 2,9 ppm en masse ou plus et de 44,7 ppm en masse ou moins,
LiNiₓMe₁₋ₓO₂ (1),
où x satisfait à 0,5 ≤ x ≤ 1 ; et Me est au moins un élément choisi parmi le groupe constitué de Mn, Co, et AI ; et
un électrolyte solide (100) ;
dans lequel l'électrolyte solide (100) comporte un électrolyte solide d'halogénure.

2. Matériau d'électrode positive (1000) selon la revendication 1, dans lequel le matériau actif d'électrode positive (110) comprend en outre :
un matériau de revêtement (120) recouvrant une surface du matériau actif d'électrode positive (110), dans lequel
le matériau de revêtement (120) comporte un élément lithium et au moins un élément choisi parmi le groupe constitué d'un élément oxygène, d'un élément fluor, et d'un élément chlore.

3. Matériau d'électrode positive (1000) selon la revendication 2, dans lequel
le matériau de revêtement (120) comporte au moins l'un choisi parmi le groupe constitué de niobate de lithium, phosphate de lithium, titanate de lithium, tungstate de lithium, fluoro-zirconate de lithium, fluoro-aluminate de lithium, fluoro-titanate de lithium, et fluoro-magnésate de lithium.

4. Matériau d'électrode positive (1000) selon l'une quelconque des revendications 1 à 3, dans lequel
l'électrolyte solide (100) est représenté par une formule suivante (2) :
Li_{α}M_{β}X_{γ} (2),
où α, β, et γ sont chacun indépendamment une valeur supérieure à 0 ;
M comporte au moins l'un choisi parmi le groupe constitué d'éléments métalliques à l'exclusion de Li et d'éléments métalloïdes ; et
X comporte au moins l'un choisi parmi le groupe constitué de F, CI, Br, et I.

5. Matériau d'électrode positive (1000) selon la revendication 5, dans lequel
M comporte de l'yttrium.

6. Matériau d'électrode positive (1000) selon la revendication 5 ou 6, dans lequel
la formule (2) satisfait à 2,5 ≤ α ≤ 3, 1 ≤ β ≤ 1,1, et γ = 6.

7. Matériau d'électrode positive (1000) selon l'une quelconque des revendications 5 à 7, dans lequel
X comporte au moins l'un choisi parmi le groupe constitué de CI et Br.

8. Batterie (2000) comprenant :
une électrode positive (201) comportant le matériau d'électrode positive (1000) selon l'une quelconque des revendications 1 à 7 ;
une électrode négative (203) ; et
une couche d'électrolyte (202) disposée entre l'électrode positive (201) et l'électrode négative (203).

9. Batterie (2000) selon la revendication 8, dans laquelle la couche d'électrolyte (202) comporte l'électrolyte solide (100).

10. Batterie (2000) selon la revendication 8 ou 9, dans laquelle
la couche d'électrolyte (202) comporte un électrolyte solide d'halogénure différent de l'électrolyte solide (100).

11. Batterie (2000) selon l'une quelconque des revendications 8 à 10, dans laquelle la couche d'électrolyte (202) comporte un électrolyte solide de sulfure.

12. Procédé de fabrication du matériau d'électrode positive (1000) selon l'une quelconque des revendications 1 à 7,
le procédé de fabrication comprenant une étape de séchage consistant à sécher un matériau constituant le matériau actif d'électrode positive (110), dans lequel
l'étape de séchage satisfait à (A) ou (B) suivant :
(A) l'étape de séchage comporte uniquement le séchage du matériau constituant le matériau actif d'électrode positive (110) dans une plage de 70 °C ou plus et moins de 120 °C pendant 12 heures ou plus et 500 heures ou moins ; et
(B) l'étape de séchage comporte au moins l'un choisi parmi le groupe constitué d'un séchage du matériau constituant le matériau actif d'électrode positive (110) dans une plage de 70 °C ou plus et moins de 120 °C pendant 12 heures ou plus et 500 heures ou moins, d'un séchage du matériau constituant le matériau actif d'électrode positive (110) à une température de 150 °C ou plus et moins de 500 °C pendant 0,5 heure ou plus, et d'un séchage du matériau à une température de 600 °C ou plus et 850 °C ou moins pendant 0,5 heure ou plus.
